Europäisches Patentamt

European Patent Office

Office européen des brevets

(11) Veröffentlichungsnummer: **0 215 379**
**B1**

(12) EUROPÄISCHE PATENTSCHRIFT

(45) Veröffentlichungstag der Patentschrift:
08.08.90

(21) Anmeldenummer: 86112214.1

(22) Anmeldetag: 04.09.86

(51) Int. Cl.⁵: **C08F 26/10**

(54) Verfahren zur Herstellung von Polyvinylpyrrolidon.

(30) Priorität: 13.09.85 DE 3532747

(43) Veröffentlichungstag der Anmeldung:
25.03.87 Patentblatt 87/13

(45) Bekanntmachung des Hinweises auf die Patenterteilung:
08.08.90 Patentblatt 90/32

(84) Benannte Vertragsstaaten:
BE CH DE FR GB LI NL

(56) Entgegenhaltungen:
DE-C- 922 378
FR-A- 1 438 070
GB-A- 781 783

(73) Patentinhaber: BASF Aktiengesellschaft,
Carl-Bosch-Strasse 38, D-6700 Ludwigshafen(DE)

(72) Erfinder: Nuber, Adolf, Dr., Kurt-Schumacher-Strasse 11,
D-6737 Boel-Iggelheim(DE)
Erfinder: Lang, Siegfried, Dr., Thomas-Mann-Strasse 22,
D-6700 Ludwigshafen(DE)
Erfinder: Sanner, Axel, Dr., Lorscher Ring 2c,
D-6710 Frankenthal(DE)
Erfinder: Schroeder, Gerd, Dr., Hardenburgstrasse 6,
D-6703 Limburgerhof(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Polyvinylpyrrolidon (PVP) in wäßriger Lösung mit Wasserstoffperoxid als Starter, bei dem ein Absinken des pH-Wertes unter 7 nicht wie üblich mit Ammoniak, sondern mit NaOH, KOH, deren Carbonat oder Bicarbonat verhindert wird.

Beim Polymerisieren von N-Vinylpyrrolidon (VP) mit $H_2O_2$ als Starter sinkt erfahrungsgemäß der pH-Wert allmählich ab. Dies muß verhindert werden, denn im sauren pH-Bereich hydrolisiert VP. Üblicherweise wird deshalb Ammoniak während der Polymerisation zugesetzt (vgl. z.B. DE 922 378). Dabei entsteht jedoch unerwünschtes Hydrazin. Beim Ersatz von Ammoniak durch tertiäre Amine wird zwar die Hydrazinbildung unterdrückt, doch wird die Polymerisation verlangsamt (loc. cit. Seite 2, 1. Tabelle) und die Polymerlösung verfärbt sich. Ähnliches gilt für andere (primäre und sekundäre) Amine. In Gegenwart von NaOH oder Soda sind Schwierigkeiten beim Anspringen der Polymerisation berichtet worden (loc. cit. Seite 2, Zeilen 85 bis 87 und 1. Tabelle).

Der Erfindung lag die Aufgabe zugrunde, ein Verfahren zur Herstellung von PVP zu entwickeln, bei dem kein Hydrazin entsteht und das ein Polymerisat von mindestens gleicher Qualität liefert wie das übliche Verfahren mit Ammoniakzusatz.

Die Lösung dieser Aufgabe besteht in einem Verfahren zur Herstellung von Polyvinylpyrrolidon vom K-Wert nach Fikentscher 14 bis 95 in wäßriger Lösung mit Wasserstoffperoxid als Starter bei 50 bis 95°C, wobei der pH-Wert der Reaktionslösung mit Hilfe von NaOH, KOH, deren Carbonat oder Bicarbonat zwischen 7 und 11 gehalten wird.

Der K-Wert ist ein Maß für das Molekulargewicht (H. Fikentscher, Cellulose-Chemie 13 (1932), Seiten 58 bis 64 und 71 bis 74).

Zur Beschleunigung des Zerfalls des $H_2O_2$ enthält die Reaktionslösung 1 ppb bis 2 ppm, vorzugsweise 3 bis 200 ppb Ionen eines für diesen Zweck üblichen Schwermetalls, vorzugsweise Kupfer, Eisen, Silber, Cobalt, in freier, d.h. nicht komplexierter Form, oder 20 ppb bis 20 ppm, vorzugsweise 50 ppb bis 5 ppm, jeweils bezogen auf VP, Ionen eines Schwermetalls und 0,5 bis 1000, vorzugsweise 1 bis 500 ppm, bezogen auf VP, eines Komplexbildners. Als Komplexbildner kommen vor allem Phosphate, z.B. Tetranatriumdiphosphat, Poly- und Metaphosphate, daneben aber auch andere Komplexbildner wie Nitrilotriessigsäure, Ethylendiamintetraessigsäure, bis(2-Aminoethyl)-aminopentaessigsäure und Acrylsäurepolymerisate in Betracht.

Zur Polymerisation kann man das monomere VP in 10 bis 60, vorzugsweise 20 bis 50 %iger wäßriger Lösung, ggf. zusammen mit 0,05 bis 4, vorzugsweise 0,1 bis 3 Gew.-%, bezogen auf VP, $H_2O_2$ vorlegen und auf 50 bis 95, vorzugsweise 65 bis 85°C aufheizen, es kann aber vorzugsweise auch erst die Monomerlösung aufgeheizt und dann das $H_2O_2$ zugegeben werden. Das Schwermetallsalz wird zweckmäßig erst nach Erreichen der Polymerisationstemperatur zugesetzt, ebenso gegebenenfalls der Komplexbildner. Die Lösung wird gerührt und der pH-Wert laufend verfolgt, beispielsweise mit einer pH-Elektrode, und durch Zutropfen der erwähnten Laugen innerhalb des Bereichs von 7 bis 11, vorzugsweise 7 bis 9,5 möglichst konstant (± 0,1) gehalten. Eine Schutzgasatmosphäre ist nicht unbedingt erforderlich.

Je nach dem angestrebten Rest-Monomerengehalt kann nach Abklingen der Hauptreaktion (Basen-Verbrauch geht deutlich zurück) nach einiger Zeit (1 bis 6 Stunden) weiteres $H_2O_2$, vorzugsweise 0,1 bis 1,0 Gew.-%, bezogen auf VP, gegebenenfalls in mehreren Gaben im Abstand von etwa 0,5 bis 2 Stunden, zugegeben werden, und nach der letzten Zugabe wird noch 1 bis 3 Stunden bei der Reaktionstemperatur gehalten. Die Gesamtpolymerisationszeit liegt im Bereich von 3 bis 20 Stunden. Der Rest-Monomerengehalt kann mit Hilfe der Iodzahl, beispielsweise nach der Methode der USP XXI, 1985, Seite 823 bestimmt werden.

Falls die Natrium- oder Kaliumionen im Produkt stören, kann man die erhaltene Polymerlösung beispielsweise mit Hilfe eines sauren Ionenaustauschers davon befreien. Ob man dazu die Polymerlösung durch einen stationären Austauscher laufen läßt oder einen kleinteiligen Ionenaustauscher in die Lösung gibt und nach einiger Zeit davon abtrennt, ist gleichgültig.

Der K-Wert des Polymeren kann über die Startermenge, Temperatur und den pH-Wert eingestellt werden (höherer pH-Wert ergibt höheren K-Wert).

Das erhaltene Polymere ist in jeder Hinsicht (beispielsweise der Molgewichtsverteilung, des Rest-Monomerengehaltes, des Gehaltes an sonstigen Verunreinigungen, der Farbe, der Stabilität) dem nach dem üblichen Verfahren mit Ammoniakzusatz erhältlichen gleichwertig, es enthält aber kein Hydrazin.

Die Bestimmung des Hydrazingehaltes kann beispielsweise nach der Methode des Pharmacopeial Forum der US Pharmacopeial Convention, Inc., Rochville, Md., März-April 1985, S. 218 erfolgen.

In den folgenden Beispielen wurde der K-Wert stets in zweiprozentiger wäßriger Lösung bei 25°C gemessen.

_Beispiel 1_

650 Teile Vinylpyrrolidon und 1200 Teile Wasser werden auf 82°C erhitzt, anschließend mit 0,65 Teilen 0,01%iger Kupfer-(II)-chlorid-Lösung, 0,65 Teilen 0,1%iger Natriumpyrophosphat-Lösung und 19,5 Teilen 30%igem Wasserstoffperoxid versetzt und bei 82°C insgesamt 5 Stunden polymerisiert. 2 und 3 Stunden nach dem Start werden jeweils 6,5 Teile 30%iges Wasserstoffperoxid nachgegeben. Zur Einhaltung eines pH-Wertes von 7,7 während der Polymerisation wird 5%ige Kalilauge zudosiert. Die Polymerisat-Lösung wird sprühgetrocknet. Das erhaltene Polymerisat weist einen K-Wert von 25,5 auf, der Restmonomerengehalt ist kleiner 0,2 % (bezogen auf Festprodukt).

_Beispiel 2_

400 Teile Vinylpyrrolidon werden in 1200 Teilen Wasser gelöst, mit 0,2 Teilen 0,01%iger Eisen-(III)-chlorid-Lösung und 13 Teilen 30%igem Wasserstoffperoxid versetzt und 6 Stunden bei 83°C polymerisiert. Zur Einhaltung eines pH-Wertes von 7,7 während der Polymerisation werden 33 Raumteile 5%iger Natronlauge zudosiert. Die Polymerisat-Lösung besitzt einen K-Wert von 24,9, der Restmonomerengehalt ist kleiner 0,3 % (bezogen auf Festgehalt).

Beispiel 3

550 Teile Vinylpyrrolidon und 1283 Teile Wasser werden auf 77°C erhitzt und anschließend mit 1,65 Teilen 0,01%iger Kupfer-(II)-chlorid-Lösung, 1,65 Teilen 1%iger Natriumhexametaphosphat-Lösung und 18 Teilen 30%igem Wasserstoffperoxid versetzt und insgesamt 12 Stunden bei 77°C polymerisiert. Zur Einhaltung eines pH-Wertes von 7,7 wird 5%ige Natronlauge zudosiert. Nach 5 Stunden werden weitere 9 Teile Wasserstoffperoxid (30%ig) hinzugefügt. Die erhaltene Polymerisat-Lösung weist einen K-Wert von 24,9 auf, der Restmonomerengehalt ist kleiner 0,1% (bezogen auf Festgehalt).

Beispiel 4

475 Teile Vinylpyrrolidon werden in 1425 Teilen Wasser gelöst, auf 70°C erhitzt und anschließend mit 3 Teilen 0,01 %iger Kupfer-(II)-chlorid-Lösung, 3 Teilen 1 %iger Natriumpyrophosphat und 11 Teilen 30 %igem Wasserstoffperoxid versetzt und insgesamt 6,5 Stunden bei 70°C polymerisiert, wobei der pH-Wert durch Zugabe von 41 Teilen 5 %iger Natronlauge auf 9,2 eingestellt wird. Nach 4,5 Stunden werden weitere 3 Teile Wasserstoffperoxid (30 %ig) zugegeben. Nach dem Sprühtrocknen erhält man ein Polymerisat mit K-Wert 33,1 und einen Restmonomerengehalt kleiner 0,1 % (bezogen auf Festprodukt).

Beispiel 5

550 Teile Vinylpyrrolidon werden in 1300 Teilen Wasser gelöst und auf 75°C aufgeheizt, anschließend mit 1,1 Teilen 0,01 %iger Cobalt-(II)-chlorid-Lösung, 1,1 Teilen 1 %iger Tetranatriumdiphosphat-Lösung und 13 Teilen 30 %igem Wasserstoffperoxid versetzt und 7 Stunden bei 75°C polymerisiert. Nach 4 Stunden werden nochmals 5,5 Teile 30 %iges Wasserstoffperoxid zugegeben. Durch Zugabe von 5 %iger Natronlauge wird der pH-Wert während der Polymerisation auf 7,8 eingestellt. Die Polymerisatlösung hat einen K-Wert von 28,7, der Restmonomerengehalt ist kleiner 0,2 % (bezogen auf Festprodukt).

Beispiel 6

600 Teile Vinylpyrrolidon werden in 1400 Teilen Wasser gelöst, auf 70°C erhitzt, anschließend mit 0,6 Teilen 0,001 %iger Kupfer(II)-chlorid-Lösung und 2 Teilen 30 %igem Wasserstoffperoxid versetzt und 12 Stunden bei 70°C polymerisiert, wobei der pH-Wert durch Zugabe von 30 Teilen 5 %iger Natronlauge auf 8,2 eingestellt wird. Nach 4 und 6 Stunden werden jeweils 2 Teile Wasserstoffperoxid (30 %ig) zugegeben. Die Polymerisatlösung weist einen K-Wert von 56.4 auf.

Beispiel 7

300 Teile Vinylpyrrolidon werden in 900 Teilen Wasser gelöst, auf 70°C aufgeheizt, mit 0,3 Teilen 0,01 %iger Kupfer-(II)-chlorid-Lösung, 0,8 Teilen 1 % Natriumpyrophosphat-Lösung und 20 Teilen 30 %igem Wasserstoffperoxid versetzt und 8 Stunden bei 70°C polymerisiert. Nach 3 und 5 Stunden werden jeweils 5 Teile 30 %iges Wasserstoffperoxid nachgegeben. Zur Einhaltung eines pH-Wertes von 7,2 während der Polymerisation werden 20 Teile 25 %ige Soda-Lösung zudosiert. Die Polymerisatlösung wird gefriergetrocknet. Das erhaltene Polymerisat weist einen K-Wert von 20,5 auf.

Beispiel 8

350 Teile Vinylpyrrolidon werden in 1370 Teilen Wasser gelöst, auf 70°C aufgeheizt, mit 14 Teilen 0,01 %iger Kupfer-(II)-chlorid-Lösung, 14 Teilen 1 %iger Tetranatriumdiphosphat-Lösung und 5 Teilen 30 %igem Wasserstoffperoxid versetzt und insgesamt 10 Stunden bei 70°C polymerisiert. Nach 3,5 und 7 Stunden werden jeweils 5 Teile 30 %iges Wasserstoffperoxid zugegeben. Zur Einhaltung eines pH-Wertes von 7,3 während der Polymerisation wird 5 %ige Natronlauge zudosiert. Die Polymerisatlösung weist einen K-Wert von 34,8 auf, der Restmonomerengehalt ist kleiner 0,2 %.

**Patentansprüche**

Verfahren zur Herstellung von Polyvinylpyrrolidon vom K-Wert nach Fikentscher 14 bis 95 in wäßriger Lösung mit Wasserstoffperoxid als Starter bei 50 bis 95°C, dadurch gekennzeichnet, daß der pH-Wert der Reaktionslösung mit Hilfe von NaOH, KOH, deren Carbonat oder Bicarbonat zwischen 7 und 11 gehalten wird, und daß man der Reaktionslösung entweder
a) freie Schwermetallionen im Konzentrationsbereich 1 ppb bis 2 ppm oder
b) 20 ppb bis 20 ppm eines Schwermetallsalzes und 0,5 bis 1000 ppm, jeweils bezogen auf Vinylpyrrolidon, eines Schwermetall-Komplexbildners zusetzt.

**Claims**

A process for preparing a polyvinylpyrrolidone having a Fikentscher K value of from 14 to 95 at from 50 to 95°C in aqueous solution with hydrogen peroxide as initiator by maintaining the reaction solution at pH 7–11 by means of NaOH, KOH, their carbonates or bicarbonates and by adding to the reaction solution either
a) free heavy metal ions within the concentration range from 1 ppb to 2 ppm, or
b) from 20 ppb to 20 ppm of a heavy metal salt and from 0,5 to 1000 ppm, each based on vinylpyrrolidone, of a heavy metal complexing agent.

**Revendications**

Procédé de préparation de polyvinylpyrrolidone d'un indice K selon Fikentscher, de 14 à 95, en solution aqueuse, avec du peroxyde d'hydrogène comme initiateur, de 50 à 95°C, caractérisé par le fait que le pH de la solution de réaction est maintenu entre 7 et 11 à l'aide de NaOH, KOH, leur carbonate ou bicarbonate et que l'on ajoute à la solution de réaction soit

a) des ions de métal lourd, libres, dans une zone de concentration de 1 ppb à 2 ppm, soit

b) 20 ppb à 20 ppm d'un sel de métal lourd et 0,5 à 1000 ppm, rapportés chaque fois à la vinylpyrrolidone, d'un complexant de métal lourd.